# EUROPEAN PATENT APPLICATION

(11) **EP 4 761 228 A1**
(43) Date of publication of application: **17.06.2026**
(21) Application number: 25222225.2
(22) Date of filing: 10.12.2025
(51) Int. Cl.: H04N 1/387, B41J 3/407

(54) **PRINTING CONTROL METHOD, PRINTING APPARATUS, AND NON-TRANSITORY COMPUTER-READABLE STORAGE MEDIUM STORING PROGRAM**

(30) Priority: 12.12.2024 JP 2024217297
(71) Applicant: Seiko Epson Corporation, Tokyo 160-8801 (JP)
(72) Inventor: KASAHARA, Hideaki, Suwa-shi 392-8502 (JP); TAKISHIMA, Keigo, Suwa-shi 392-8502 (JP)
(74) Representative: Lewis Silkin LLP

(57) **Abstract**

A printing control method includes calculating a feature value for each of a plurality of target pixels included in a captured image obtained by imaging a medium on which a pattern is formed, classifying each of the plurality of target pixels into any one of a plurality of feature value clusters based on the feature value, classifying the plurality of feature value clusters into a pattern cluster or a background cluster based on a predetermined condition, acquiring a pattern region for the pattern in the captured image by comparing, based on a result of the classification into the pattern cluster or the background cluster, the captured image and a pattern image concerning the pattern formed on the medium, correcting, based on a shape of the pattern region, as a corrected print image, a print image to be printed to be superimposed on the pattern formed on the medium, and printing the corrected print image on the medium.

## Description

The present application is based on, and claims priority from JP Application Serial Number 2024-217297, filed December 12, 2024, the disclosure of which is hereby incorporated by reference herein in its entirety.

### BACKGROUND

### 1. Technical Field

The present disclosure relates to a printing control method, a printing apparatus, and a non-transitory computer-readable storage medium storing a program.

### 2. Related Art

For example, JP-A-2021-84359 discloses a printing control method for comparing a captured image obtained by imaging a medium on which a pattern is formed and a pattern image concerning the pattern to correct a print image to be printed to be superimposed on the pattern.

JP-A-2021-84359 is an example of the related art.

However, in such a printing control method, it is not easy to accurately identify the pattern formed on the medium. For this reason, it has been desired to improve correction accuracy of the print image to be printed to be superimposed on the pattern.

### SUMMARY

According to an aspect of the present disclosure, there is provided a printing control method including: acquiring a captured image obtained by imaging a medium on which a pattern is formed; calculating a feature value for each of a plurality of target pixels included in the captured image; classifying each of the plurality of target pixels into any one of a plurality of feature value clusters based on the feature value; classifying the plurality of feature value clusters into a pattern cluster or a background cluster based on a predetermined condition; acquiring a pattern region for the pattern in the captured image by comparing, based on a result of the classification into the pattern cluster or the background cluster, the captured image and a pattern image concerning the pattern formed on the medium; correcting, based on a shape of the pattern region, as a corrected print image, a print image to be printed to be superimposed on the pattern formed on the medium; and printing the corrected print image on the medium.

According to an aspect of the present disclosure, there is provided a printing apparatus that executes: acquiring a captured image obtained by imaging a medium on which a pattern is formed; calculating a feature value for each of a plurality of target pixels included in the captured image; classifying each of the plurality of target pixels into any one of a plurality of feature value clusters based on the feature value; classifying the plurality of feature value clusters into a pattern cluster or a background cluster based on a predetermined condition; acquiring a pattern region for the pattern in the captured image by comparing, based on a result of the classification into the pattern cluster or the background cluster, the captured image and a pattern image concerning the pattern formed on the medium; correcting, based on a shape of the pattern region, as a corrected print image, a print image to be printed to be superimposed on the pattern formed on the medium; and printing the corrected print image on the medium.

According to an aspect of the present disclosure, there is provided a non-transitory computer-readable storage medium storing a program, the program causing at least one computer to execute: acquiring a captured image obtained by imaging a medium on which a pattern is formed; calculating a feature value for each of a plurality of target pixels included in the captured image; classifying each of the plurality of target pixels into any one of a plurality of feature value clusters based on the feature value; classifying the plurality of feature value clusters into a pattern cluster or a background cluster based on a predetermined condition; acquiring a pattern region for the pattern in the captured image by comparing, based on a result of the classification into the pattern cluster or the background cluster, the captured image and a pattern image concerning the pattern formed on the medium; correcting, based on a shape of the pattern region, as a corrected print image, a print image to be printed to be superimposed on the pattern formed on the medium; and printing the corrected print image on the medium.

### BRIEF DESCRIPTION OF THE DRAWINGS

FIG. 1 is a schematic diagram illustrating a printing apparatus in a first embodiment.
FIG. 2 is a block diagram illustrating an electric configuration of the printing apparatus in the first embodiment.
FIG. 3 is a schematic diagram illustrating a pattern of a medium in the first embodiment.
FIG. 4 is a schematic diagram illustrating pattern image data in the first embodiment.
FIG. 5 is a schematic diagram illustrating print image data in the first embodiment.
FIG. 6 is a schematic diagram illustrating various pixels in the first embodiment.
FIG. 7 is a schematic diagram illustrating a feature value cluster of a captured image in the first embodiment.
FIG. 8 is a schematic diagram illustrating a pattern region in the first embodiment.
FIG. 9 is a flowchart illustrating pattern learning control processing in the first embodiment.
FIG. 10 is a flowchart illustrating pattern region learning processing in the first embodiment.
FIG. 11 is a flowchart illustrating printing control processing in the first embodiment.
FIG. 12 is a flowchart illustrating imaged pattern region acquisition processing in the first embodiment.
FIG. 13 is a flowchart illustrating pattern region learning processing in a second embodiment.
FIG. 14 is a flowchart illustrating imaged pattern region acquisition processing in the second embodiment.
FIG. 15 is a flowchart illustrating imaged pattern region acquisition processing in a third embodiment.

### DESCRIPTION OF EMBODIMENTS

### First Embodiment

Hereinafter, a printing control method, a printing apparatus, and a non-transitory computer-readable storage medium storing a program according to an embodiment are explained. In the following explanation, in a state in which the printing apparatus is installed on a horizontal plane, an axis intersecting the horizontal plane is defined as a Z axis, an axis intersecting the Z axis is defined as an X axis, and an axis intersecting the X axis and the Z axis is defined as a Y axis. One direction along the X axis is defined as a first width direction X1 and the other direction along the X axis is defined as a second width direction X2. One direction along the Y axis is defined as a forward direction Y1 and the other direction along the Y axis is defined as a backward direction Y2. An upward direction along the Z axis is defined as an upward direction Z1 and a downward direction along the Z axis is defined as a downward direction Z2.

### Configuration of a printing apparatus 11

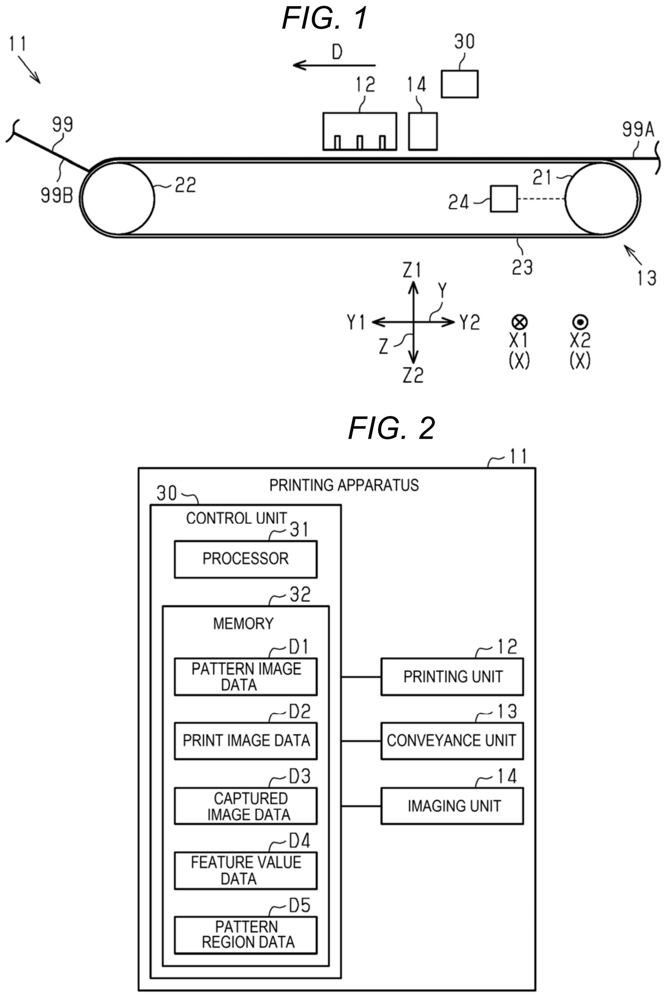

As illustrated in FIG. 1, a printing apparatus 11 performs printing on a medium 99. The printing apparatus 11 may be an inkjet printer that performs printing on the medium 99 by ejecting ink onto the medium 99. The medium 99 includes a first surface 99A and a second surface 99B. The second surface 99B is a surface opposite to the first surface 99A.

The medium 99 may be long. The medium 99 may be let out from, for example, a rolled raw material. The medium 99 is not limited be long and may be a single sheet. The medium 99 may be a fabric.

The printing apparatus 11 includes a printing unit 12. The printing unit 12 may be provided in the upward direction Z1 of the medium 99. The printing unit 12 may be configured to perform printing on the medium 99 by ejecting ink onto the medium 99. The printing unit 12 performs printing on the conveyed medium 99.

The printing unit 12 may include a head. The printing unit 12 may be a serial head or may be a line head. The serial head is a head that scans the medium 99 along the X axis. The line head is a head that simultaneously performs recording across the X axis.

The printing apparatus 11 includes a conveyance unit 13. The conveyance unit 13 is configured to convey the medium 99 in a conveyance direction D. The conveyance direction D may be along the Y axis. The conveyance direction D may be in the forward direction Y1.

The conveyance unit 13 may include a first roller 21 and a second roller 22. The first roller 21 is located further upstream than the second roller 22 in the conveyance direction D. The first roller 21 is located further upstream than the printing unit 12 in the conveyance direction D. The second roller 22 is located further downstream than the printing unit 12 in the conveyance direction D.

The conveyance unit 13 includes a conveyance belt 23. The conveyance belt 23 is configured to convey the medium 99 in a state of supporting the medium 99. The conveyance belt 23 is wound around the first roller 21 and the second roller 22. When the first roller 21 rotates, the conveyance belt 23 moves along the first roller 21 and the second roller 22.

The conveyance unit 13 includes a roller driving unit 24. The roller driving unit 24 is a driving source for rotating a plurality of rollers. The roller driving unit 24 may be a motor. The roller driving unit 24 is coupled to the first roller 21 but may be coupled to the second roller 22 or may be coupled to both of the first roller 21 and the second roller 22.

The conveyance unit 13 conveys the medium 99 such that a surface facing the printing unit 12 is a printing surface. Accordingly, when the medium 99 is placed such that the first surface 99A faces the printing unit 12, the first surface 99A is the printing surface.

The printing apparatus 11 includes an imaging unit 14. The imaging unit 14 is provided at a position facing the medium 99. The imaging unit 14 may be provided in the upward direction Z1 of the medium 99. The imaging unit 14 is located further upstream than the printing unit 12 in the conveyance direction D. The imaging unit 14 is configured to image the medium 99. When the medium 99 is conveyed such that the first surface 99A of the medium 99 faces the imaging unit 14, the imaging unit 14 images the first surface 99A of the medium 99.

The printing apparatus 11 includes a control unit 30. The control unit 30 comprehensively controls the printing apparatus 11. The control unit 30 controls various operations executed in the printing apparatus 11. The control unit 30 controls the printing unit 12, the conveyance unit 13, and the imaging unit 14.

As illustrated in FIG. 2, the control unit 30 may include one or more computers. The control unit 30 may include one or more processors 31 and one or more memories 32. The processor 31 may be a central processing unit (CPU). The processor 31 is configured to execute processing based on a program stored in the memory 32.

The control unit 30 can be configured as a circuit including α: one or more processors that execute various kinds of processing according to a computer program, β: one or more dedicated hardware circuits that execute at least some of the various kinds of processing, or γ: a combination of α and β. The hardware circuit is, for example, an application specific integrated circuit.

The memory 32 includes a computer-readable medium accessible by a general-purpose or dedicated computer. The memory 32 stores a program code or a command configured to cause the processor 31 to execute processing. The memory 32 is a non-transitory computer-readable medium storing a program but may include a transitory computer-readable medium.

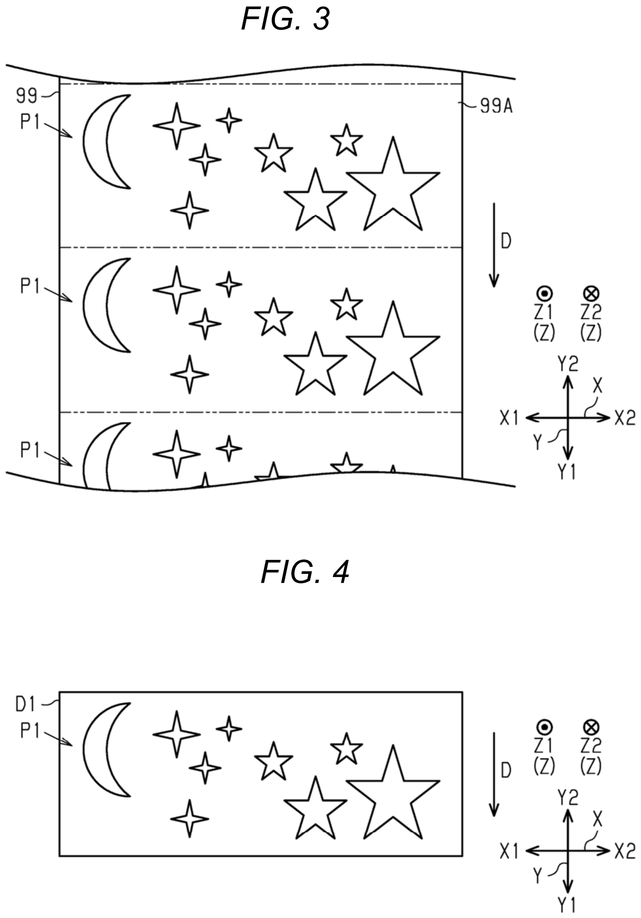

Pattern image data D1 is stored in the memory 32. The pattern image data D1 is image data of a pattern P1 illustrated in FIG. 4. The pattern image data D1 indicates the shape of the pattern P1 illustrated in FIGS. 3 and 4. The pattern P1 is provided on the first surface 99A. The pattern image data D1 may be CAD data indicating the pattern P1 created by software.

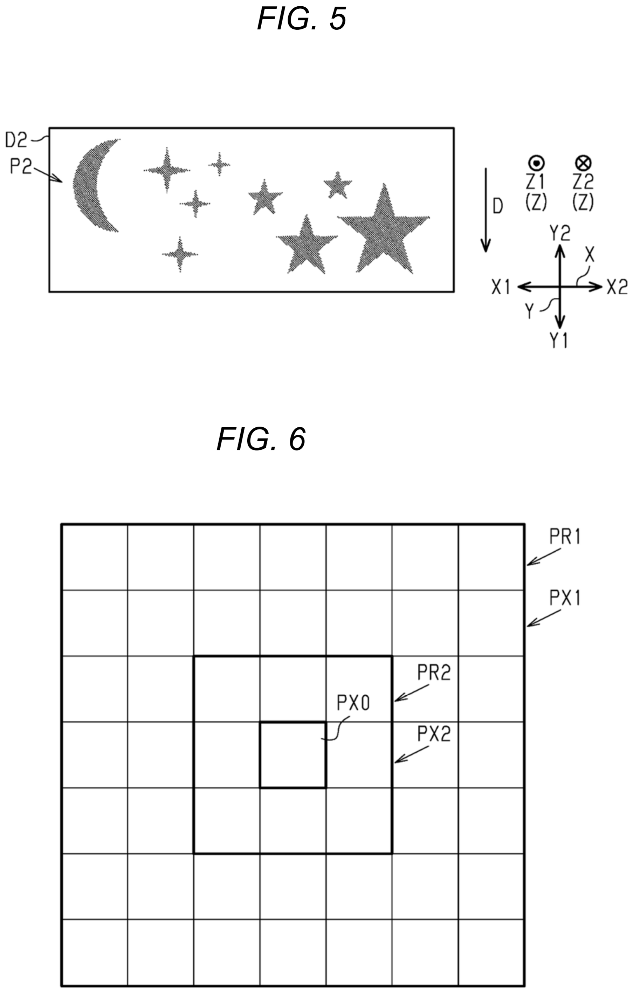

Print image data D2 is stored in the memory 32. The print image data D2 is image data of a print image P2 illustrated in FIG. 5. The print image data D2 indicates a shape, a color, and the like of the print image P2. The print image P2 is printed on the first surface 99A. The print image P2 is printed on the first surface 99A to correspond to the pattern P1. The print image data D2 may be CAD data indicating the print image P2 created by software.

Captured image data D3 is stored in the memory 32. The captured image data D3 is image data of a captured image. The captured image is captured by the imaging unit 14. The captured image may be an image obtained by imaging the medium 99 from the first surface 99A. In particular, the captured image may be an image obtained by imaging the pattern P1 provided on the first surface 99A. The captured image data D3 may include image data for learning and image data for printing.

Feature value data D4 is stored in the memory 32. The feature value data D4 is data indicating a feature value of pixels of the captured image. The feature value is data for identifying whether the pixels of the captured image are the pattern region corresponding to the pattern P1. The feature value is data for identifying whether the pixels of the captured image are a pattern region corresponding to the pattern P1 or a background region that is not the pattern region. The feature value data D4 may include data for learning and data for printing.

Pattern region data D5 is stored in the memory 32. The pattern region data D5 is data indicating, based on the feature value data D4, whether the pixels of the captured image are a pattern region. The pattern region data D5 is data indicating whether the pixels of the captured image are a pattern region or a background region. The pattern region data D5 may include data for learning and data for printing. The pattern region data D5 for learning is based on the feature data D4 for learning calculated from the captured image data D3 for learning. The pattern region data D5 for printing is based on the feature value data D4 for printing calculated from the captured image data D3 for printing.

### Type of the medium 99 and printing on the medium 99

As illustrated in FIG. 3, the medium 99 may be, for example, jacquard fabric. The jacquard fabric is fabric obtained by weaving a fiber such as a thread to form the pattern P1. The pattern P1 may be formed by unevenness caused by weaving.

The pattern P1 is provided on the first surface 99A of the medium 99. The pattern P1 is formed of a figure, a pattern, or the like that is applied to the medium 99 in advance in order to impart a design property to the medium 99. The pattern P1 is periodically provided on the medium 99. The pattern P1 may be periodically provided on the medium 99 to repeatedly appear in the conveyance direction D.

As illustrated in FIG. 4, the pattern image data D1 is basic data of the pattern P1 provided on the first surface 99A. In the pattern image data D1, a pattern region where the pattern P1 is provided may be identifiable.

As illustrated in FIG. 5, the print image P2 indicates a shape, a color, and the like of an image printed on the first surface 99A of the medium 99 including the pattern P1. The print image P2 is an image corresponding to the pattern P1 on the first surface 99A.

As illustrated in FIG. 6, a captured image includes a plurality of pixels. The captured image includes a plurality of pixels corresponding to the medium 99. The captured image may not include a plurality of pixels not corresponding to the medium 99. The feature value data D4 is calculated for each plurality of pixels corresponding to the medium 99 included in the captured image.

A pixel for which the feature value data D4 is calculated is set as a target pixel PX0. Although a plurality of pixels corresponding to the medium 99 among the pixels constituting the captured image are respectively set as target pixels PX0, all pixels corresponding to the medium 99 among the pixels constituting the captured image may be respectively set as the target pixels PX0.

The feature value data D4 of the target pixel PX0 may be calculated based on a plurality of pixels in a predetermined range centered on the target pixel PX0. The feature value data D4 is allocated to each plurality of target pixels PX0 of the captured image data D3.

The feature value may include at least one type of an element. The feature value may include a plurality of types of elements. The feature value may include a tone value of the target pixel PX0. The feature value may include an average of tone values of reference pixels PX1. The feature value may include the variance of the tone values of the reference pixels PX1. The feature value may include the skewness of the tone values of the reference pixels PX1. The feature value may include the kurtosis of the tone values of the reference pixels PX1.

The reference pixels PX1 are pixels included in a reference region PR1. The reference region PR1 is a region of a predetermined number of pixels centered on the target pixel PX0. The reference pixels PX1 include the target pixel PX0. For example, the reference region PR1 may be a region for seven vertical pixels and seven horizontal pixels centered on the target pixel PX0. In this case, the number of reference pixels PX1 is forty-nine.

The feature value may be the edge intensity of the target pixel PX0. The feature value may include an average of the edge intensity of the reference region PR1. The feature value may include the variance of the edge intensity of the reference region PR1. The feature value may include the skewness of the edge intensity of the reference region PR1. The feature value may include the kurtosis of the edge intensity of the reference region PR1.

The edge intensity of the target pixel PX0 may be calculated based on a plurality of edge pixels PX2 in an edge region PR2 centered on the target pixel PX0. For example, the edge region PR2 may be a region for three vertical pixels and three horizontal pixels centered on the target pixel PX0. The edge intensity of the target pixel PX0 may be calculated based on a tone difference between the target pixel PX0 and the edge pixel PX2 adjacent to the target pixel PX0. The edge intensity of the target pixel PX0 may be calculated by a square root of a sum of squares in two directions of the vertical direction and the horizontal direction using a Sobel filter.

As explained above, the feature value may include a feature value concerning the target pixel PX0. The feature value concerning the target pixel PX0 may include the tone value of the target pixel PX0 and the edge intensity of the target pixel PX0. The feature value of the target pixel PX0 may include feature values concerning the reference pixels PX1. The feature values concerning the reference pixels PX1 may include the tone values of the reference pixels PX1 and the edge intensity of the reference pixels PX1.

Whether each plurality of target pixels PX0 are a pattern region is calculated based on the feature value data D4. In this case, the target pixel PX0 is classified into any one of a plurality of feature value clusters for each plurality of target pixels PX0 based on the feature value data D4.

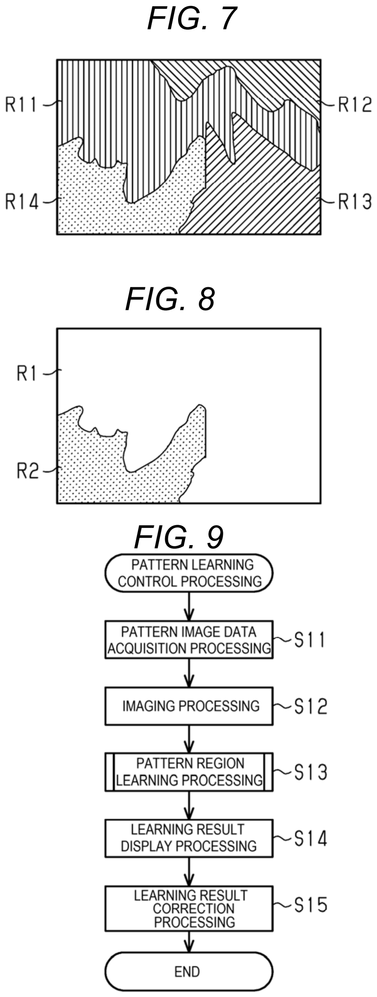

As illustrated in FIG. 7, as a specific example, each plurality of target pixels PX0 are classified into a plurality of cluster regions respectively corresponding to a plurality of feature value clusters. The plurality of cluster regions are displayed on a not-illustrated display device. For example, the plurality of cluster regions may include a first cluster region R11, a second cluster region R12, a third cluster region R13, and a fourth cluster region R14.

Each plurality of cluster regions are associated with a pattern cluster or a background cluster. The pattern cluster is a cluster classified as a region where the pattern P1 is provided. The background cluster is a cluster classified as a region where the pattern P1 is not provided.

It is possible to identify whether each plurality of feature value clusters classified based on the feature value data D4 are the pattern cluster or the background cluster. Accordingly, the pattern region data D5 is generated based on the feature value data D4. The pattern region data D5 is allocated to each plurality of target pixels PX0 of the captured image data D3.

As illustrated in FIG. 8, for example, the first cluster region R11, the second cluster region R12, and the third cluster region R13 may be classified as a first region R1 corresponding to the pattern cluster. The first region R1 is equivalent to the pattern region. The fourth cluster region R14 may be classified as a second region R2 corresponding to the background cluster. The second region R2 is equivalent to the background region.

At a preparation stage, the pattern region data D5 is learned based on the feature value data D4 generated from the captured image data D3 for learning. The preparation stage is a stage before a printing stage of performing printing on the medium 99.

At the printing stage, the print image P2 is corrected to correspond to the pattern P1 based on the feature value data D4 generated from the captured image data D3 for printing and the pattern region data D5 learned at the preparation stage. The corrected print image P2 is printed on the medium 99.

### Pattern learning control processing

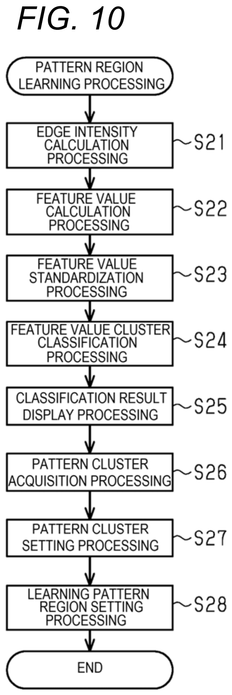

Pattern learning control processing is explained with reference to FIGS. 9 and 10. The pattern learning control processing is executed according to an instruction of a user at the preparation stage. At the preparation stage, the medium 99 is highly accurately placed with respect to the conveyance belt 23. Accordingly, the pattern region data D5 for learning can be acquired from the pattern P1 formed on the medium 99. The subsequent processing is explained as processing executed by the control unit 30 but may be processing executed by the processor 31.

As illustrated in FIG. 9, in step S11, the control unit 30 executes pattern image data acquisition processing. In this processing, the control unit 30 reads the pattern image data D1 from the memory 32. Accordingly, the control unit 30 acquires the pattern image data D1.

In step S12, the control unit 30 executes imaging processing. In this processing, the control unit 30 controls the conveyance unit 13 to convey the medium 99. The control unit 30 controls the imaging unit 14 to image the medium 99 in a state in which the conveyance of the medium 99 is stopped. The control unit 30 stores, in the memory 32, the captured image data D3 for learning captured by the imaging unit 14. As explained above, the control unit 30 acquires, as a captured image for learning, a captured image obtained by imaging the medium 99 on which the pattern P1 is formed.

### Pattern region learning processing

In step S13, the control unit 30 executes pattern region learning processing. As explained in detail below with reference to FIG. 10, the control unit 30 causes a pattern region for learning to be learned based on the captured image data D3 for learning.

As illustrated in FIG. 10, in the pattern region learning processing, in step S21, the control unit 30 executes edge intensity calculation processing. In this processing, the control unit 30 calculates, targeting each of the plurality of target pixels PX0, the edge intensity of the target pixel PX0 based on the captured image data D3 for learning. The control unit 30 stores, in the memory 32, data indicating a size of the edge region PR2 used when calculating the edge intensity.

In step S22, the control unit 30 executes feature value calculation processing. In this processing, the control unit 30 calculates, based on the captured image data D3 for learning, a feature value for each of the plurality of target pixels PX0 included in the captured image. In particular, the control unit 30 calculates a feature value concerning the reference pixels PX1 based on the captured image data D3 for learning.

The control unit 30 stores the feature value data D4 indicating the calculated feature value in the memory 32 to correspond to each of the plurality of target pixels PX0. As explained above, the control unit 30 allocates the feature value to each of the plurality of target pixels PX0 in the captured image data D3 for learning.

In step S23, the control unit 30 executes feature value standardization processing. In this processing, the control unit 30 standardizes a plurality of types of feature values. In particular, the control unit 30 calculates standardization parameters necessary for standardizing the plurality of types of feature values. The standardization parameters are parameters, averages of which are 0 and standard deviations of which are 1, for all of the plurality of target pixels PX0. The control unit 30 stores the standardization parameters in the memory 32.

The control unit 30 standardizes, targeting all of the plurality of target pixels PX0, for each plurality of types of feature values, the feature values based on the feature value data D4 and the standardization parameters. Accordingly, the control unit 30 standardizes the feature value for each of the plurality of target pixels PX0.

In step S24, the control unit 30 executes feature value cluster classification processing. In this processing, the control unit 30 classifies each of the plurality of target pixels PX0 into any one of the plurality of feature value clusters based on the feature value. In particular, the control unit 30 classifies each plurality of target pixels PX0 into any one of the plurality of feature value clusters based on the standardized feature value.

Specifically, the control unit 30 classifies each of the plurality of target pixels PX0 into a feature value cluster such that the feature values standardized for each plurality of feature clusters are close to one another. The control unit 30 stores, in the memory 32, a result of classification into the feature value clusters to correspond to each of the plurality of target pixels PX0.

The control unit 30 may classify each of the plurality of target pixels PX0 into the feature value cluster using the K-means clustering. A value of K used in the K-means clustering is a predetermined value and may be, for example, any one of 8 to 10. When using the K-means clustering, the control unit 30 may store a center value of feature value clusters in the memory 32 as a result of classification into the feature value clusters.

In step S25, the control unit 30 executes classification result display processing. In this processing, the control unit 30 causes a not-illustrated display device to display a captured image for learning such that feature value clusters into which the plurality of target pixels PX0 are respectively classified can be identified. The plurality of target pixels PX0 may be displayed in colors that can respectively identify the feature value clusters.

In step S26, the control unit 30 executes pattern cluster acquisition processing. In this processing, the control unit 30 acquires, according to an instruction of a user input from a not-illustrated input unit, data indicating whether the plurality of feature value clusters are pattern clusters or background clusters.

In step S27, the control unit 30 executes pattern cluster setting processing. In this processing, the control unit 30 stores, in the memory 32, data indicating, to correspond to each of the plurality of feature value clusters, whether the feature value cluster is a pattern cluster or a background cluster.

As explained above, the control unit 30 classifies the plurality of feature value clusters into the pattern cluster or the background cluster based on a predetermined condition. The predetermined condition may be a condition of at least any one of the plurality of feature value clusters being set as the pattern cluster according to an instruction of the user.

In step S28, the control unit 30 executes learning pattern region setting processing. In this processing, the control unit 30 stores the target pixel PX0 associated with the feature value cluster corresponding to the pattern cluster in the memory 32 as a pattern region.

Accordingly, the control unit 30 allocates the pattern cluster or the background cluster to each of a plurality of pixels included in the captured image for learning. As explained above, the captured image is a pattern image in which the pattern cluster or the background cluster is allocated to each of a plurality of pixels.

The control unit 30 acquires the pattern region data D5 for learning. As explained above, the control unit 30 acquires a learning result indicating whether each plurality of target pixels PX0 of the learning pattern region data D5 are a pattern region or a background region.

The control unit 30 registers data indicating the pattern region for learning in the memory 32 to correspond to each of the plurality of target pixels PX0. Accordingly, the control unit 30 is capable of identifying a learning result indicating whether a region of the medium 99 is a pattern region or a background region.

As illustrated in FIG. 9, in step S14, the control unit 30 executes learning result display processing. In this processing, the control unit 30 causes a not-illustrated display unit to display the pattern image data D1 and the pattern region data D5.

In step S15, the control unit 30 executes learning result correction processing. In this processing, the control unit 30 corrects the pattern region data D5 for learning according to an instruction of the user input from a not-illustrated input unit. Accordingly, the pattern region data D5 for learning can be changed to pattern region data with less distortion.

### Printing control processing

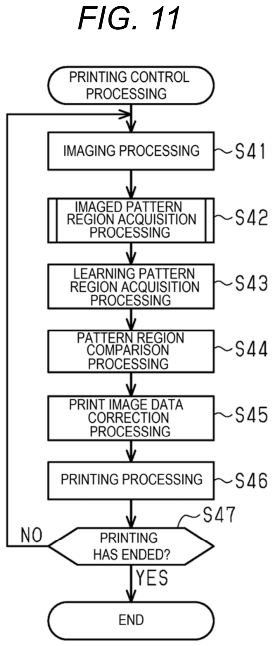

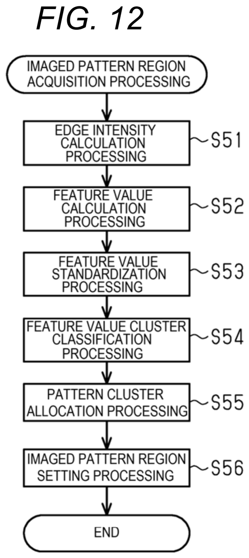

Printing control processing is explained with reference to FIGS. 11 and 12. The printing control processing is executed according to an instruction of the user at a printing stage. At the printing stage, printing is performed based on the pattern region data D5 for learning prepared at the preparation stage.

As illustrated in FIG. 11, in step S41, the control unit 30 executes imaging processing as in step S12 in FIG. 9. In this processing, the control unit 30 controls the conveyance unit 13 to convey the medium 99. The control unit 30 controls the imaging unit 14 to image the medium 99 in a state in which the conveyance of the medium 99 is stopped. The control unit 30 stores the captured image data D3 for printing captured by the imaging unit 14 in the memory 32. As explained above, the control unit 30 acquires, as a captured image for printing, a captured image obtained by imaging the medium 99 on which the pattern P1 is formed.

### IMAGED PATTERN REGION ACQUISITION PROCESSING

In step S42, the control unit 30 executes imaged pattern region acquisition processing. Specifically, as explained below with reference to FIG. 12, the control unit 30 acquires an imaged pattern region in the captured image for printing based on the captured image data D3 for printing acquired in step S41. The captured pattern region is a pattern region based on the captured image data D3 for printing. That is, the imaged pattern region is a pattern region for printing.

As illustrated in FIG. 12, in the imaged pattern region acquisition processing, in step S51, the control unit 30 executes the edge intensity calculation processing as in step S21 in FIG. 10. In this processing, the control unit 30 reads, from the memory 32, data indicating the size of the edge region PR2 used when calculating the edge intensity. The control unit 30 calculates, targeting each of the plurality of target pixels PX0, edge intensity of the target pixel PX0 based on the captured image data D3 for printing.

In particular, the control unit 30 calculates, targeting each of the plurality of target pixels PX0, edge intensity of the target pixel PX0 based on the data indicating the size of the edge region PR2 stored in the memory 32 in step S21.

In step S52, the control unit 30 executes the feature value calculation processing as in step S22 in FIG. 10. In this processing, the control unit 30 calculates, based on the captured image data D3 for printing, a feature value for each of the plurality of target pixels PX0 included in the captured image. In particular, the control unit 30 calculates a feature value concerning the reference pixels PX1 based on the captured image data D3 for printing.

The control unit 30 stores the feature value data D4 indicating the calculated feature value in the memory 32 to correspond to each of the plurality of target pixels PX0. As explained above, the control unit 30 allocates the feature value to each of the plurality of target pixels PX0 in the captured image data D3 for printing.

In step S53, the control unit 30 executes the feature value standardization processing as in step S23 in FIG. 10. In this processing, the control unit 30 standardizes a plurality of types of feature values. In particular, the control unit 30 reads, from the memory 32, standardization parameters necessary for standardizing the plurality of types of feature values. The standardization parameters are parameters stored in the memory 32 in step S23 in FIG. 10. Accordingly, the control unit 30 standardizes the feature value for each of the plurality of target pixels PX0.

In step S54, the control unit 30 executes the feature value cluster classification processing as in step S24 in FIG. 10. In this processing, the control unit 30 classifies each of the plurality of target pixels PX0 into any one of the plurality of feature value clusters based on the feature value. In particular, the control unit 30 classifies each plurality of target pixels PX0 into any one of the plurality of feature value clusters based on the standardized feature value.

The control unit 30 reads a result the classification into the feature value cluster from the memory 32. The control unit 30 classifies each of the plurality of target pixels PX0 into a feature value cluster based on the result of classification into the feature value cluster such that feature values standardized for each plurality of feature clusters are close to one another. When the K-mean clustering is used, the control unit 30 classifies each of the plurality of target pixels PX0 into a feature value cluster such that a feature value standardized for each plurality of feature clusters is close to a center value of the feature value clusters.

In step S55, the control unit 30 executes pattern cluster allocation processing. In this processing, the control unit 30 reads data indicating whether the feature value cluster is the pattern cluster or the background cluster set in step S27 in FIG. 10 from the memory 32 for each plurality of feature value clusters. Accordingly, the control unit 30 allocates the pattern cluster or the background cluster to each of the plurality of feature value clusters.

As explained above, the control unit 30 classifies the plurality of feature value clusters into the pattern cluster or the background cluster based on a predetermined condition. The predetermined condition may be a condition corresponding to the pattern region data D5 for learning.

In step S56, the control unit 30 executes imaged pattern region setting processing. In this processing, the control unit 30 stores the target pixel PX0 associated with the feature value cluster corresponding to the pattern cluster in the memory 32 as a pattern region.

Accordingly, the control unit 30 sets whether each of the plurality of target pixels PX0 included in the captured image is the pattern cluster or the background cluster. As explained above, the captured image is an image in which whether the pattern cluster or the background cluster is allocated to each of the plurality of pixels.

As illustrated in FIG. 11, in step S43, the control unit 30 executes learning pattern region acquisition processing. In this processing, the control unit 30 reads the pattern region data D5 for learning from the memory 32. Accordingly, the control unit 30 acquires the pattern region for learning.

In step S44, the control unit 30 executes pattern region comparison processing. In this processing, the control unit 30 compares the pattern region data D5 for printing with the pattern region data D5 for learning. Specifically, the control unit 30 calculates the deviation between the pattern region for printing and the pattern region for learning.

As explained above, the control unit 30 compares the captured image and the pattern image concerning the pattern P1 formed on the medium 99 based on the result of the plurality of feature value clusters being classified into the pattern cluster or the background cluster. Accordingly, the control unit 30 acquires a pattern region for the pattern P1 in the captured image based on a comparison result.

In step S45, the control unit 30 executes print image data correction processing. In this processing, the control unit 30 corrects the print image data D2 based on a comparison result of the pattern region data D5 for printing and the pattern region data D5 for learning. In particular, the control unit 30 corrects the print image data D2 such that the pattern region data D5 for printing and the pattern region data D5 for learning coincide. Accordingly, the control unit 30 generates corrected print image data obtained by correcting the print image data D2.

In particular, the control unit 30 corrects, based on a comparison result of the shape of the pattern region for printing and the shape of the pattern region for learning, as a corrected print image, the print image P2 to be printed to be superimposed on the pattern P1 formed on the medium 99. That is, the control unit 30 corrects, based on the shape of the pattern region for printing, as the corrected print image, the print image P2 to be printed to be superimposed on the pattern P1 formed on the medium 99.

In step S46, the control unit 30 carries out printing processing. In this processing, the control unit 30 controls, based on the corrected print image data corrected in step S45, the printing unit 12 to print the corrected print image on the medium 99. Accordingly, the control unit 30 causes the printing unit 12 to print the print image P2 on the medium 99 to be superimposed on the pattern P1 formed on the medium 99.

In step S47, the control unit 30 determines whether the printing has ended. In this processing, when determining that the printing has not ended, the control unit 30 shifts the processing to step S41. When determining that the printing has ended, the control unit 30 ends the printing control processing. As explained above, the control unit 30 repeatedly executes steps S41 to S46 until the printing ends.

### Action and effects of the first embodiment

Action and effects of the first embodiment are explained.

(1-1) The control unit 30 classifies, based on a feature value for each of the plurality of target pixels PX0 included in a captured image obtained by imaging the medium 99 on which the pattern P1 is formed, the target pixel PX0 into any one of a plurality of feature value clusters. The control unit 30 classifies the plurality of feature value clusters into a pattern cluster or a background cluster. The control unit 30 acquires a pattern region for the pattern P1 in the captured image by comparing the captured image and the pattern image based on a result of the classification into the pattern cluster or the background cluster. The control unit 30 corrects, based on the shape of the pattern region, the print image P2 to be printed to be superimposed on the pattern P1 formed on the medium 99. With this configuration, it is possible to classify, based on the feature value for each of the plurality of target pixels PX0, the target pixel PX0 into any one of the plurality of feature value clusters and classify the plurality of feature value clusters into the pattern cluster or the background cluster. Accordingly, it is possible to accurately identify the pattern P1 formed on the medium 99. Therefore, it is possible to improve the correction accuracy of the print image P2 to be printed to be superimposed on the pattern P1. As explained above, by improving the correction accuracy of the print image P2, it is possible to improve the accuracy of printing the print image P2 to correspond to the pattern P1 even in a situation in which the medium 99 expands or contracts or is distorted.

In particular, when the medium 99 is a fabric woven to form the pattern P1, there is a tendency that an edge with respect to a weaving direction of a fiber such as a thread is obtained and an edge representing a contour and a shape of the pattern P1 is not obtained. In such a medium 99, a further effect is achieved.

(1-2) The control unit 30 calculates, as a feature value for each of the target pixels PX0, a feature value concerning the reference pixels PX1 included in the reference region PR1 centered on each of the plurality of target pixels PX0. With this configuration, it is possible to classify, based on not only the feature value of each of the plurality of target pixels PX0 but also the feature value concerning the reference pixels PX1 included in the reference region PR1 centered on each of the plurality of target pixels PX0, the target pixel PX0 into any one of the plurality of feature value clusters. Accordingly, it is possible to accurately identify the pattern P1 formed on the medium 99. Therefore, it is possible to improve the correction accuracy of the print image P2 to be printed to be superimposed on the pattern P1.

(1-3) The feature value concerning the reference pixels PX1 includes at least one of a tone value of the reference pixels PX1 and the edge intensity of the reference pixels PX1. With this configuration, it is possible to classify the reference pixels PX1 into any one of the plurality of feature value clusters based on at least one of the tone value of the reference pixels PX1 and the edge intensity of the reference pixels PX1. Accordingly, it is possible to accurately identify the pattern P1 formed on the medium 99. Therefore, it is possible to improve the correction accuracy of the print image P2 to be printed to be superimposed on the pattern P1.

(1-4) The control unit 30 standardizes a feature value for each of the plurality of target pixels PX0. The control unit 30 classifies the target pixel PX0 into any one of the plurality of feature value clusters based on the standardized feature value. With this configuration, it is possible to standardize the feature value for each of the plurality of target pixels PX0 and it is possible to classify the target pixel PX0 into any one of the plurality of feature value clusters based on the standardized feature value. Since the feature value is standardized, it is possible to reduce a bias of influence in each feature value. Accordingly, it is possible to accurately identify the pattern P1 formed on the medium 99. Therefore, it is possible to improve the correction accuracy of the print image P2 to be printed to be superimposed on the pattern P1.

(1-5) The pattern image is an image in which a pattern cluster or a background cluster is allocated to each of a plurality of pixels included in the pattern image. With this configuration, it is possible to acquire a pattern region for the pattern P1 in the captured image by comparing the captured image and the pattern image in which the pattern cluster or the background cluster is allocated to each of the plurality of pixels included in the pattern image. Accordingly, it is possible to accurately identify the pattern P1 formed on the medium 99. Therefore, it is possible to improve the correction accuracy of the print image P2 to be printed to be superimposed on the pattern P1.

### Second Embodiment

Subsequently, a second embodiment is explained. In the following explanation, redundant explanation is omitted or simplified about the same configurations as the configurations in the embodiment explained above, and configurations different from the configurations in the embodiment explained above are explained.

In the second embodiment, the control unit 30 may classify each of the plurality of target pixels PX0 into any of a plurality of feature value clusters based on a plurality of types of feature values that can take the same range. The plurality of types of feature values that take the same range may be a tone value for each of the reference pixels PX1.

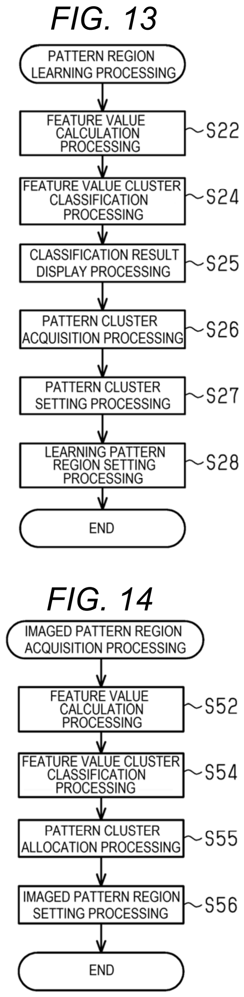

As illustrated in FIG. 13, in the pattern region learning processing, the control unit 30 does not execute step S21. Accordingly, the control unit 30 may not acquire the edge intensity of the target pixel PX0 as the feature value for each of the plurality of target pixels PX0. In the pattern region learning processing, the control unit 30 does not execute step S23. Accordingly, the control unit 30 may not standardize the feature value.

As illustrated in FIG. 14, in the imaged pattern region acquisition processing, the control unit 30 does not execute step S51. Accordingly, the control unit 30 may not acquire the edge intensity of the target pixel PX0 as the feature value for each of the plurality of target pixels PX0. In the imaged pattern region acquisition processing, the control unit 30 does not execute step S53. Accordingly, the control unit 30 may not standardize the feature value.

### Action and Effects of the second embodiment

Action and effects of the second embodiment are explained.

(2-1) In addition, the control unit 30 does not standardize the feature value. Therefore, it is possible to reduce a control load.

(2-2) The control unit 30 does not acquire the edge intensity of the target pixel PX0 as the feature value for each of the plurality of target pixels PX0. Therefore, it is possible to reduce a control load.

### Third Embodiment

Subsequently, a third embodiment is explained.

In the third embodiment, the plurality of target pixels PX0 may be classified into a plurality of feature value clusters based on feature values for the plurality of target pixels PX0 without feature values for the plurality of non-target pixels in a captured image being calculated.

The captured image includes the plurality of target pixels PX0 and the plurality of non-target pixels. The non-target pixels are different from the plurality of target pixels PX0. When the captured image includes a plurality of pixels corresponding to the medium 99, the plurality of pixels corresponding to the medium 99 include the plurality of target pixels PX0 and the plurality of non-target pixels. The plurality of target pixels PX0 are pixels extracted at a predetermined ratio from the plurality of pixels corresponding to the medium 99. The plurality of target pixels PX0 may be less than the plurality of non-target pixels.

### Imaged pattern region acquisition processing

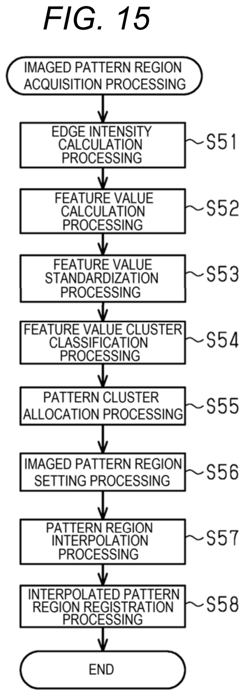

As illustrated in FIG. 15, in the imaged pattern region acquisition processing, in steps S52 to S56, the control unit 30 performs control for each of a part of the plurality of target pixels PX0 included in the captured image. In steps S52 to S56, the control unit 30 does not perform control for each of some of the plurality of non-target pixels included in the captured image. When step S56 ends, the control unit 30 shifts the processing to step S57.

In step S57, the control unit 30 executes pattern region interpolation processing. In this processing, the control unit 30 interpolates, based on a result of the classification of each of the plurality of target pixels PX0 into the pattern cluster or the background cluster, the classification of each of the plurality of non-target pixels into the pattern cluster or the background cluster.

The control unit 30 may interpolate the classification of each of the plurality of non-target pixels into the pattern cluster or the background cluster by performing the nearest neighbor interpolation based on an allocation result of the pattern region or the background region to each of the plurality of target pixels PX0. The control unit 30 may smooth a nearest neighbor interpolated interpolation result to thereby correct the interpolation result.

In step S58, the control unit 30 executes interpolated pattern region registration processing. In this processing, the control unit 30 allocates the interpolated pattern cluster or the interpolated background cluster to each of the plurality of non-target pixels among the plurality of pixels included in the pattern image. As explained above, the captured image is an image in which the pattern cluster or the background cluster is allocated to each of the plurality of pixels in both of the plurality of target pixels PX0 and the plurality of non-target pixels.

### Action and effects of the third embodiment

Action and effects of the third embodiment are explained.

(3-1) The control unit 30 interpolates, based on a result of classification of each of the plurality of target pixels PX0 into a pattern cluster or a background cluster, classification of each of a plurality of non-target pixels into the pattern cluster or the background cluster. With this configuration, it is possible to interpolate the classification into the pattern cluster or the background cluster based on a feature value for each of the plurality of target pixels PX0 even if a feature value for each of the plurality of non-target pixels is not calculated. Therefore, it is possible to reduce a control load.

### Modifications

The present embodiment can be changed and implemented as explained below. The present embodiment and the following modifications can be implemented in combination with each other as long as no technical inconsistencies are involved.

Any feature value only has to be adopted as the feature value. For example, a feature value using a gray-level co-occurrence matrix (GLCM) may be adopted.

The control unit 30 may classify each of the plurality of target pixels PX0 into any one of the plurality of feature value clusters based on one type of a feature value rather than the plurality of types of feature values. The one type of the feature value may be a tone value for each of the plurality of target pixels PX0.

The edge intensity of the target pixel PX0 may be calculated using a plurality of pixels included in a region smaller than the reference region PR1. The edge intensity of the target pixel PX0 may be calculated using a plurality of pixels included in a region larger than the reference region PR1. The edge intensity of the target pixel PX0 may be calculated using the plurality of reference pixels PX1 in the reference region PR1.

The control unit 30 uses the K-means clustering when classifying each of the plurality of target pixels PX0 into the feature value cluster but is not limited thereto. The control unit 30 may use the X- means clustering when classifying each of the plurality of target pixels PX0 into the feature value cluster.

The control unit 30 may cause a not-illustrated display device to display supplementary information other than color coding such that the feature value clusters into which the plurality of target pixels PX0 are respectively classified can be identified. The control unit 30 may cause the not-illustrated display device to display the supplementary information without performing the color-coding such that the feature value clusters into which the plurality of target pixels PX0 are respectively classified can be identified. The supplementary information may include a range of a tone value of the target pixel PX0 for each plurality of feature value clusters.

The control unit 30 may allocate the pattern cluster to each plurality of feature value clusters and may not allocate the background cluster to each plurality of feature value clusters. The control unit 30 may allocate the background cluster to each plurality of feature value clusters and may not allocate the pattern cluster to each plurality of feature value clusters. The control unit 30 may allocate the pattern cluster or the background cluster to each plurality of feature value clusters.

A plurality of types of pattern clusters may be able to be set. The plurality of types of pattern clusters may include a first pattern cluster and a second pattern cluster. The first pattern cluster and the second pattern cluster are different pattern clusters. The first pattern cluster may be a cluster in which a first pattern is provided and the second pattern cluster may be a cluster in which a second pattern is provided. The control unit 30 may allocate the first pattern cluster or the second pattern cluster to each plurality of feature value clusters.

The control unit 30 may allocate clusters other than the pattern cluster and the background cluster to each plurality of feature value clusters. The control unit 30 may allocate a pending cluster other than the pattern cluster and the background cluster to each plurality of feature value clusters. The suspended cluster may be a cluster that keeps the pattern cluster and the background cluster pending. The pending cluster may be allocated as a non-target pixel as in the third embodiment.

The control unit 30 may not acquire the pattern image data D1 in the pattern learning control processing. In the pattern learning control processing, the control unit 30 may allocate the pattern region or the background region to each of the plurality of target pixels PX0 by comparing the pattern image data D1 and the captured image data D3 for learning. In such a case, the control unit 30 may allocate a region having a higher degree of similarity to the pattern image data D1 as the pattern region in the captured image data D3 for learning. As explained above, the predetermined condition may be a condition including whether the similarity to the pattern image data D1 is higher.

The pattern region data D5 for learning may be stored in advance in the memory 32 without being generated by executing the pattern learning control processing. The pattern region data D5 for learning may be allocated to the pattern image data D1 in advance and stored in the memory 32. That is, the pattern image related to the pattern P1 formed on the medium 99 may be the captured image data D3 for learning acquired at the preparation stage or the pattern image data D1. The control unit 30 may execute the printing control processing without executing the pattern learning control processing.

The medium 99 is not limited to the roll body. The medium 99 may be paper, a film or a sheet made of resin, a composite film of resin and metal, a laminated film, woven fabric, nonwoven fabric, a metal foil, a metal film, a ceramic sheet, clothing, or the like.

Any liquid can be optionally selected if the liquid adheres to the medium 99 to enable recording on the medium 99. For example, the ink includes ink in which particles of a functional material formed of a solid matter such as pigment or metal particles are dissolved, dispersed, or mixed in a solvent and includes various compositions such as aqueous ink, oil-based ink, gel ink, and hot melt ink.

The expression "at least any one of" used in the present specification means one or more of desired choices. As an example, if the number of choices is two, the expression "at least any one of" used in the present specification means only one choice or both of the two choices. As another example, if the number of choices is three or more, the expression "at least any one of" used in the present specification means only one choice or a combination of any two or more choices.

### Appendices

Technical ideas grasped from the embodiments and the modifications explained above and action effects of the technical ideas are described below. The technical ideas and the action effects thereof can be combined with each other as long as no technical inconsistencies are involved.
[1] A printing control method including: acquiring a captured image obtained by imaging a medium on which a pattern is formed; calculating a feature value for each of a plurality of target pixels included in the captured image; classifying each of the plurality of target pixels into any one of a plurality of feature value clusters based on the feature value; classifying the plurality of feature value clusters into a pattern cluster or a background cluster based on a predetermined condition; acquiring a pattern region for the pattern in the captured image by comparing, based on a result of the classification into the pattern cluster or the background cluster, the captured image and a pattern image concerning the pattern formed on the medium; correcting, based on a shape of the pattern region, as a corrected print image, a print image to be printed to be superimposed on the pattern formed on the medium; and printing the corrected print image on the medium.
   With this configuration, it is possible to classify, based on the feature value for each of the plurality of target pixels, the target pixel into any one of the plurality of feature value clusters and classify the plurality of feature value clusters into the pattern cluster or the background cluster. Accordingly, it is possible to accurately identify the pattern formed on the medium. Therefore, it is possible to improve the correction accuracy of the print image to be printed to be superimposed on the pattern.
[2] In the printing control method, the calculating the feature value for each of the plurality of target pixels may include calculating a feature value concerning a reference pixel included in a reference region centered on each of the plurality of target pixels.
   With this configuration, it is possible to classify the target pixel into any one of the plurality of feature value clusters based on not only the feature value of each of the plurality of target pixels but also a feature value concerning the reference pixel included in the reference region centered on each of the plurality of target pixels. Accordingly, it is possible to accurately identify the pattern formed on the medium. Therefore, it is possible to improve the correction accuracy of the print image to be printed to be superimposed on the pattern.
[3] In the printing control method, the feature value concerning the reference pixel may include at least one of a tone value of the reference pixel and the edge intensity of the reference pixel. That is, the feature value concerning the reference pixel may include at least one selected from the group consisting of a tone value of the reference pixel and the edge intensity of the reference pixel.
   With this configuration, it is possible to classify the target pixel into any one of the plurality of feature value clusters based on at least one of the tone value of the reference pixel and the edge intensity of the reference pixel. Accordingly, it is possible to accurately identify the pattern formed on the medium. Therefore, it is possible to improve the correction accuracy of the print image to be printed to be superimposed on the pattern.
[4] The printing control method may include standardizing the feature value for each of the plurality of target pixels, and the classifying the target pixel into any one of the plurality of feature value clusters may include classifying the target pixel into any one of the plurality of feature value clusters based on the standardized feature value.
   With this configuration, it is possible to standardize the feature value for each of the plurality of target pixels and it is possible to classify the target pixel into any one of the plurality of feature value clusters based on the standardized feature value. Accordingly, it is possible to accurately identify the pattern formed on the medium. Therefore, it is possible to improve the correction accuracy of the print image to be printed to be superimposed on the pattern.
[5] In the printing control method, the pattern image may be an image in which the pattern cluster or the background cluster is allocated to each of a plurality of pixels included in the pattern image.
   With this configuration, it is possible to acquire the pattern region for the pattern in the captured image by comparing the captured image and the pattern image in which the pattern cluster or the background cluster is allocated to each of the plurality of pixels included in the pattern image. Accordingly, it is possible to accurately identify the pattern formed on the medium. Therefore, it is possible to improve the correction accuracy of the print image to be printed to be superimposed on the pattern.
[6] In the printing control method, the captured image may include the plurality of target pixels and a plurality of non-target pixels different from the plurality of target pixels, and the printing control method may further include interpolating, based on a result of the classification of each of the plurality of target pixels into the pattern cluster or the background cluster, classification of each of the plurality of non-target pixels into the pattern cluster or the background cluster.
   With this configuration, it is possible to interpolate the classification of the target pixel into the pattern cluster or the background cluster based on the feature value for each of the plurality of target pixels even if the feature value for each of the plurality of non-target pixels is not calculated. Therefore, it is possible to reduce a control load.
[7] A printing apparatus that executes: acquiring a captured image obtained by imaging a medium on which a pattern is formed; calculating a feature value for each of a plurality of target pixels included in the captured image; classifying each of the plurality of target pixels into any one of a plurality of feature value clusters based on the feature value; classifying the plurality of feature value clusters into a pattern cluster or a background cluster based on a predetermined condition; acquiring a pattern region for the pattern in the captured image by comparing, based on a result of the classification into the pattern cluster or the background cluster, the captured image and a pattern image concerning the pattern formed on the medium; correcting, based on a shape of the pattern region, as a corrected print image, a print image to be printed to be superimposed on the pattern formed on the medium; and printing the corrected print image on the medium. With this configuration, the same effects as the effects in [1] are achieved.
[8] A non-transitory computer-readable storage medium storing a program, the program causing at least one computer to execute: acquiring a captured image obtained by imaging a medium on which a pattern is formed; calculating a feature value for each of a plurality of target pixels included in the captured image; classifying each of the plurality of target pixels into any one of a plurality of feature value clusters based on the feature value; classifying the plurality of feature value clusters into a pattern cluster or a background cluster based on a predetermined condition; acquiring a pattern region for the pattern in the captured image by comparing, based on a result of the classification into the pattern cluster or the background cluster, the captured image and a pattern image concerning the pattern formed on the medium; correcting, based on a shape of the pattern region, as a corrected print image, a print image to be printed to be superimposed on the pattern formed on the medium; and printing the corrected print image on the medium. With this configuration, the same effects as the effects in [1] are achieved.

## Claims

1. A printing control method comprising:
acquiring a captured image obtained by imaging a medium on which a pattern is formed; calculating a feature value for each of a plurality of target pixels included in the captured image;
classifying each of the plurality of target pixels into any one of a plurality of feature value clusters based on the feature value;
classifying the plurality of feature value clusters into a pattern cluster or a background cluster based on a predetermined condition;
acquiring a pattern region for the pattern in the captured image by comparing, based on a result of the classification into the pattern cluster or the background cluster, the captured image and a pattern image concerning the pattern formed on the medium;
correcting, based on a shape of the pattern region, as a corrected print image, a print image to be printed to be superimposed on the pattern formed on the medium; and
printing the corrected print image on the medium.

2. The printing control method according to claim 1, wherein the calculating the feature value for each of the plurality of target pixels includes calculating a feature value concerning a reference pixel included in a reference region centered on each of the plurality of target pixels.

3. The printing control method according to claim 2, wherein the feature value concerning the reference pixel includes at least one of a tone value of the reference pixel and the edge intensity of the reference pixel.

4. The printing control method according to claim 1, further comprising standardizing the feature value for each of the plurality of target pixels, wherein
the classifying the target pixel into any one of the plurality of feature value clusters includes classifying the target pixel into any one of the plurality of feature value clusters based on the standardized feature value.

5. The printing control method according to claim 1, wherein the pattern image is an image in which the pattern cluster or the background cluster is allocated to each of a plurality of pixels included in the pattern image.

6. The printing control method according to claim 1, wherein
the captured image includes the plurality of target pixels and a plurality of non-target pixels different from the plurality of target pixels, and
the printing control method further comprises interpolating, based on a result of the classification of each of the plurality of target pixels into the pattern cluster or the background cluster, classification of each of the plurality of non-target pixels into the pattern cluster or the background cluster.

7. A printing apparatus that executes:
acquiring a captured image obtained by imaging a medium on which a pattern is formed;
calculating a feature value for each of a plurality of target pixels included in the captured image;
classifying each of the plurality of target pixels into any one of a plurality of feature value clusters based on the feature value;
classifying the plurality of feature value clusters into a pattern cluster or a background cluster based on a predetermined condition;
acquiring a pattern region for the pattern in the captured image by comparing, based on a result of the classification into the pattern cluster or the background cluster, the captured image and a pattern image concerning the pattern formed on the medium;
correcting, based on a shape of the pattern region, as a corrected print image, a print image to be printed to be superimposed on the pattern formed on the medium; and
printing the corrected print image on the medium.

8. A non-transitory computer-readable storage medium storing a program, the program causing at least one computer to execute:
acquiring a captured image obtained by imaging a medium on which a pattern is formed; calculating a feature value for each of a plurality of target pixels included in the captured image;
classifying each of the plurality of target pixels into any one of a plurality of feature value clusters based on the feature value;
classifying the plurality of feature value clusters into a pattern cluster or a background cluster based on a predetermined condition;
acquiring a pattern region for the pattern in the captured image by comparing, based on a result of the classification into the pattern cluster or the background cluster, the captured image and a pattern image concerning the pattern formed on the medium;
correcting, based on a shape of the pattern region, as a corrected print image, a print image to be printed to be superimposed on the pattern formed on the medium; and
printing the corrected print image on the medium.
